Europäisches Patentamt

European Patent Office

Office européen des brevets

(11) Publication number: **0 382 683**
**A2**

# (12) EUROPEAN PATENT APPLICATION

(21) Application number: **90830019.7**

(22) Date of filing: **19.01.90**

(51) Int. Cl.⁵: **B62L 1/00**

(30) Priority: **23.01.89 IT 4755789**

(43) Date of publication of application:
**16.08.90 Bulletin 90/33**

(84) Designated Contracting States:
**AT BE CH DE ES FR GB GR LI LU NL SE**

(71) Applicant: **Spisso, Luigi**
**60 Via M. Boccucci**
**I-81034 Mondragone (CE)(IT)**

(72) Inventor: **Spisso, Luigi**
**60 Via M. Boccucci**
**I-81034 Mondragone (CE)(IT)**

(74) Representative: **Tonon, Gilberto et al**
**c/o Società Italiana Brevetti Piazza di Pietra,**
**39**
**I-00186 Roma(IT)**

(54) A central disk brake for motorcycles.

(57) A brake disk, located in the median plane of a respective motorcycle wheel, is integral with supporting means, constituting as a whole the spoke arrangement of said wheel, suitable for connecting it rigidly, to the tire rim and rotatably to the hub of said wheel, respectively; the hub being supported in a fixed way by the fork of the latter cooperating in a centered position with a braking caliper located straddling said disk.

FIG. 2

## A CENTRAL DISK BRAKE FOR MOTORCYCLES

The present invention relates to the field of disk brakes for motorcycles and in particular it relates to a disk brake arranged on the median plan of both the front and rear wheels of a motorcycle.

At present, in some kinds of motorcycles, in particular in large engine displacement motorcycles and at any rate in motorcycles capable of reaching very high top speeds, the braking system comprises the arrangement of a disk brake on one side both of the front wheel and the rear wheel.

The above mentioned lateral arrangement of disk brakes in motorcycles entails the inconvenience that cannot be negleted caused by the generation, at the moment of braking, of force components that are asymmetrically applied with respect to the median plane of the respective wheel that produce asymmetrical stresses on the support members of the wheel.

In an attempt to overcome the effects of the above mentioned inconveniences, in some kinds of motorcycles a disk brake has been placed on each side of the front wheel, even if a single lateral brake is still present on the rear wheel, owing to the impossibility of mounting a second one on the opposite side because of the presence on the latter of the power transmission members.

This arrangement also is, however, unsatisfactory for the compensation of the unbalance of the braking forces that act on the motorcycle, because insofar as the rear wheel is concerned the above considerations are still valid, while insofar as the front wheel is concerned it is possible that a non precise adjustment of the two disk brakes located on respective opposite sides results in a different braking force.

The aim of the present invention is to provide a disk brake for motorcycles arranged in the plane of the respective wheel, where it is mounted in such a way as to allow at all times a balanced braking both on the front wheel and on the rear wheel, thus overcoming the above mentioned inconveniences deriving from the mounting of this kind of brake in conventional motorcycles.

The present invention will be better disclosed from the discussion of an embodiment thereof given only by way of a non limiting example, and making reference to the figures of the single sheet of drawings attached thereto and wherein:

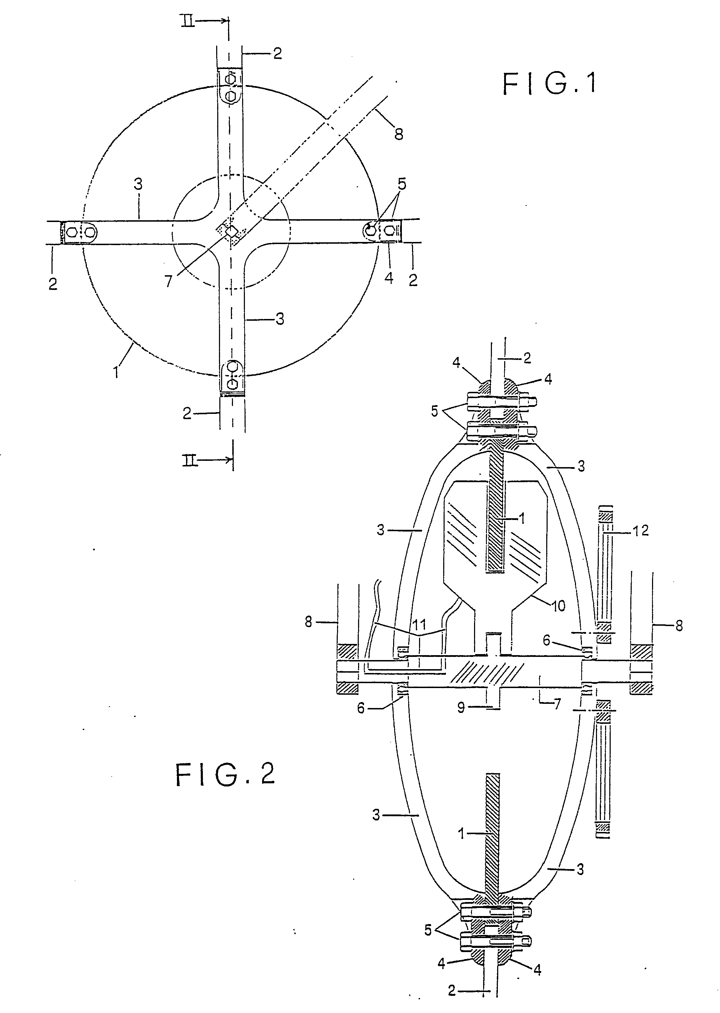

figure 1 shows a schematic lateral view, with cut-away parts, of the disk brake in question; and

figure 2 is a sectional schematic view, on an enlarged scale, taken along the line II-II of figure 1.

With reference to the drawings as above referred to, in 1 a brake disk is shown, of a known kind that, consequently, will not be disclosed in detail, relating to the rear wheel (not shown) of a motorcycle.

According to the present invention, the disk 1 is located on the median plane of said wheel and is rigidly connected to the tire rim of the latter by means of four radial supports 2, spaced at intervals of 90° one from the other, the ends of which opposite to those fastened to said tire rim are locked to the disk 1 by means of a pair of brackets 3, lying on respective planes at right angles to each other, the end portions 4 of which lock between them, by means of bolts 5, one end of the respective radial supports 2 and the corresponding peripheral portions of the disk 1.

Each pair of brackets 3 is rotatably supported along its transversal axis, by means of ball bearings 6, on the hub 7 of the wheel in question that includes a portion having a greater diameter comprised between said brackets and two terminal portions having a reduced diameter, protruding through respective through-holes machined in the brackets 3 until reaching corresponding housings on the end part of the legs of the rear fork 8 of the motorcycle in which they are locked.

In a central position, the hub 7 is integral with a protruding disk 9, perpendicular to the axis of the hub 6 itself, on which is fastened, for instance by means of bolts, a braking caliper 10, of a known type and therefore not disclosed in detail, arranged between two brackets 3 of one of said pairs and embracing the disk 1 between its jaws.

In the present exemplary embodiment the control for the operation of the caliper 10 is transmitted from the brake through an oleodynamic circuit 11.

Since the disk brake of the present embodiment given as an example relates, as stated above, to the rear wheel of the motorcycle in question, to the corresponding one of the brackets 3 is rigidly connected the conventional toothed crown gear 12 for the transmission of power, which, on the contrary, is not present in the disk brake relating to the front wheel.

The operation of the disk brake according to the present invention is substantially similar to that of the known disk brakes.

In particular, the disk 1, fastened to the respective wheel of the motorcycle by means of the radial supports 2 and the brackets 3, rotates jointly with said wheel during the running of the vehicle thanks to the rotation, on the fixed hub 7, of the two pairs of brackets 3, through the respective ball bearings 6. The caliper 10, on the contrary, remains constantly in a fixed position, fastened to the protruding disk 9 on the hub 7, allowing, in the rest condition, the free rotation between its jaws of the disk 1.

When the driver actuates the brake of the motorcycle, through the oleodynamic circuit 11, the locking of the jaws of the caliper will be caused so as to press the friction pads, being part of the normal structure of the disk brakes, supported and guided by the caliper, against the opposed faces of the disk 1 with a consequent braking of the relative wheel.

From the above it is immediately evident that, with the disk brake according to the invention, that operates on the median plane of the relative wheel, it is possible to avoid that the forces developed during braking may have components out of said plane such as to cause the generation of undesired torques, as occurs in conventional disk brakes in this kind of vehicle.

The present invention is not limited to the disclosed embodiment, but encompasses any modification thereof, such as, for instance, each pair of brackets 3 may be a single piece together with the respective radial supports 2, with the disk 1 anyhow firmly associated to said support arrangement; the control of the braking caliper 10 rather than being made by means of an oleodynamic control may be operated by means of a mechanical system or by means of a combined one; the caliper 10 may be associated to a second similar caliper extending from the side of the hub 7 opposite to that whereon the first caliper is mounted.

## Claims

1. A disk brake for motorcycles comprising: a brake disk arranged in the median plane of the wheel carrying it; support means, constituting as a whole the spoke system of said wheel, suitable for firmly connected said brake disk to the tire rim of said wheel and arranged for rotating around the hub of said wheel fastened to the fork of the latter; at least one braking caliper firmly fastened in a central position with respect to said hub, with said brake disk interposed between its jaws; control means suitable for causing the tightening of said braking caliper on the opposed faces of said brake disk following the actuation of the brake by the driver.

2. A disk brake according to claim 1, wherein said support means for said brake disk comprise at least four radial members angularly equispaced, having first ends fastened to the tire rim of the wheel whereon it is mounted and second ends fastened to respective opposite ends of at least two substantially elliptical members, lying on planes at right angles to each other, rotatably supported, in correspondence with their semiminor axis, on said hub by means of ball bearings, at the interior of which extends said brake disk fastened to their said opposite ends.

3. A disk brake according to claims 1 and 2, wherein said hub is fastened in a central position and with an extension perpendicular to its axis whereon said at least one braking caliper is fastened.

4. A disk brake according to claims 1 to 3, wherein said control means for said braking caliper comprise a hydraulic control, a mechanical control or a mixed one.

5. A disk brake according to any of the preceding claims, wherein the usual toothed crown gear for the transmission of power is fastened to said support means for said braking disk when the wheel whereon the brake is mounted is the rear wheel.

6. A disk brake for motorcycles substantially as hereinbefore disclosed with reference to the single attached drawing.

FIG.1

FIG.2